# EUROPEAN PATENT SPECIFICATION

(11) **EP 3 900 581 B1**
(45) Date of publication and mention of the grant of the patent: **27.09.2023**
(21) Application number: 21169526.7
(22) Date of filing: 20.04.2021
(51) Int. Cl.: A47G 9/02

(54) **A DUVET**
BETTDECKE
COUETTE

(30) Priority: 20.04.2020 GB 202005718
(43) Date of publication of application: 27.10.2021
(73) Proprietor: Beijen, Pauline, Chudleigh, Devon TQ13 0DR (GB); Beijen, Dick, Chudleigh, Devon TQ13 0DR (GB)
(72) Inventor: Beijen, Pauline, Chudleigh, Devon TQ13 0DR (GB); Beijen, Dick, Chudleigh, Devon TQ13 0DR (GB)
(74) Representative: Haseltine Lake Kempner LLP

(56) References cited:
- DE-A1-102008 024 961
- KR-B1- 102 042 359
- US-A- 5 887 299
- US-A1- 2018 168 372

## Description

The invention relates to a duvet.

An occupant of a bed will often place a duvet over themselves in order to keep warm. Different duvets have different thermal insulation ratings, and, thus, an occupant may select a duvet that maintains them at or close to their ideal temperature. In beds with multiple occupants, a single duvet is placed over both occupants in order to keep both occupants warm. However, each occupant may have a different preferred temperature at which they wish to sleep, and, thus, one or both of the occupants may have to sleep at a temperature that is either too hot or too cold. This can lead to a reduction in the quality of their sleep.

It is therefore desirable to provide an improved duvet and duvet component that addresses this issue.

DE 10 2008 024961 A1 describes a modular cover comprising two modules with two or more plates arranged at each side of each module. The plates are formed protruding on an edge of the module. A connecting element is arranged at each plate. Another connecting element is arranged at each side of each module. The latter connecting element is detachably connected with the former connecting element.

US 5 887 299 A describes a convertible multi-purpose covering formed of a pair of similarly shaped and sized flexible sheets of material having predetermined surfaces and edges positioned in face-to-face relationship at a first location. The sheets are aligned along their edges and connected along the top and side marginal edges leaving the bottom edges of the sheets open and thereafter turning the connected sheets right-side-out. Insulating filling sufficiently shaped, sized or volumed is inserted through the opening and arranged to evenly fill the space between the connected sheets, with the sheets then being connected along the bottom marginal edges to close the opening forming a comforter body. Two pluralities of fasteners arranged in parallel longitudinal rows are attached to the top surface of the body along the right side edge. Two pluralities of fasteners arranged in parallel longitudinal rows are attached to the bottom surface of the body along the left side edge, and another plurality of fasteners in a lateral row are attached to the bottom surface of the body along the bottom edge to permit detachable connections and conversion of coverings to form several optional bedding items such as comforters, sleeping bags and body wraps.

According to an aspect there is described a duvet comprising a first duvet component and a second duvet component. The first duvet component comprises: a first quilted region; a first flap coupled to the first quilted region along a first seam; a plurality of fastener components disposed on the first quilted region; and a plurality of fastener components disposed on the first flap, wherein each of the plurality of fastener components disposed on the first quilted region opposes and is configured for connection to a respective one of the plurality of fastener components disposed on the first flap. The second duvet component comprises: a second quilted region; a second flap coupled to the second quilted region along a second seam; a plurality of fastener components disposed on the second quilted region; and a plurality of fastener components disposed on the second flap, wherein each of the plurality of fastener components disposed on the second quilted region opposes and is configured for connection to a respective one of the plurality of fastener components disposed on the second flap. Each of the plurality of the fastener components disposed on the first quilted region of the first duvet component is further configured for connection to a respective one of the plurality of fastener components disposed on the second flap of the second duvet component. Each of the plurality of the fastener components disposed on the first flap of the first duvet component is further configured for connection to a respective one of the plurality of fastener components disposed on the second quilted region of the second duvet component. The first duvet component further comprises a first plurality of cords each having a fixed end attached near or at the first seam and a free end and the second duvet component further comprises a second plurality of cords each having a fixed end attached near or at the second seam and a free end. Each cord of the first plurality of cords of the first duvet component is configured to be tied to a respective cord of the second plurality of cords of the second duvet component.

The quilted region of the first duvet component may comprise a first filler material. The quilted region of the second duvet component may comprise a second filler material different from the first filler material.

The first duvet component and the second duvet component may have different average thicknesses. The first duvet component and the second duvet component may have different average grammages. The first duvet component and the second duvet component may have different surface areas. The first duvet component and the second duvet component may have different shapes. The first duvet component and the second duvet component may have different thermal insulances.

The duvet may further comprise a cover sized to receive the first duvet component and the second duvet component.

Each of the plurality of fastener components disposed on the first quilted region and each of the plurality of fastener components disposed on the first flap may either be hook fastener components or loop fastener components of hook-and-loop fasteners. Each of the plurality of fastener components disposed on the second quilted region and each of the plurality of fastener components disposed on the second flap may either be hook fastener components or loop fastener components of hook-and-loop fasteners.

Each of the plurality of fastener components disposed on the first quilted region may be of a first type and each of the plurality of fastener components disposed on the first flap may be of a second type. Each of the plurality of fastener components disposed on the second quilted region may be of the second type and each of the plurality of fastener components disposed on the second flap may be of the first type.

Each of the plurality of fastener components disposed on the first quilted region and its respective one of the plurality of fastener components disposed on the first flap may be spaced from the first seam by an equal distance. Each of the plurality of fastener components disposed on the second quilted region and its respective one of the plurality of fastener components disposed on the second flap may be spaced from the second seam by an equal distance.

Each of the plurality of fastener components disposed on the first quilted region and its respective one of the plurality of fastener components disposed on the first flap may lie on a respective axis which is perpendicular to the first seam. Each of the plurality of fastener components disposed on the second quilted region and its respective one of the plurality of fastener components disposed on the second flap may lie on a respective axis which is perpendicular to the second seam.

The plurality of fastener components disposed on the first quilted region may be arranged in a first line and the plurality of fastener components disposed on the first flap may be arranged in a second line. The plurality of fastener components disposed on the second quilted region may be arranged in a first line and the plurality of fastener components disposed on the second flap may be arranged in a second line.

The plurality of fastener components disposed on the first quilted region may be separated from each other by an equal distance. The plurality of fastener components disposed on the first flap may be separated from each other by an equal distance. The plurality of fastener components disposed on the second quilted region may be separated from each other by an equal distance. The plurality of fastener components disposed on the second flap may be separated from each other by an equal distance.

The average thickness of the first flap may be less than the average thickness of the first quilted region. The average thickness of the second flap may be less than the average thickness of the second quilted region.

The first seam may be offset from an edge of the first quilted region such that a first slot is formed between the first quilted region and the first flap. The second seam may be offset from an edge of the second quilted region such that a second slot is formed between the second quilted region and the second flap.

The fixed end of each of the one or more first cords may be fixed to an edge of the first quilted region. The fixed end of each of the one or more second cords may be fixed to an edge of the second quilted region.

Each of the plurality of the fastener components disposed on the first quilted region may be adjacent its respective one of the plurality of fastener components disposed on the first flap. Each of the plurality of the fastener components disposed on the second quilted region may be adjacent its respective one of the plurality of fastener components disposed on the second flap.

For a better understanding of the present invention, and to show more clearly how it may be carried into effect, reference will now be made, by way of example, to the accompanying drawings, in which:
Figure 1 is a schematic plan view of a duvet component in a first configuration;
Figure 2 is a schematic side view of the duvet component in the first configuration;
Figure 3 is a schematic side view of the duvet component in a second configuration;
Figure 4 is a schematic plan view of the duvet component in the second configuration;
Figure 5 is a schematic plan view of a duvet in a first configuration;
Figure 6 is a schematic side view of the duvet in the first configuration;
Figure 7 is a schematic side view of the duvet in a second configuration;
Figure 8 is a schematic plan view of the duvet in the second configuration; and
Figure 9 is a schematic side view of an alternative duvet in the second configuration.

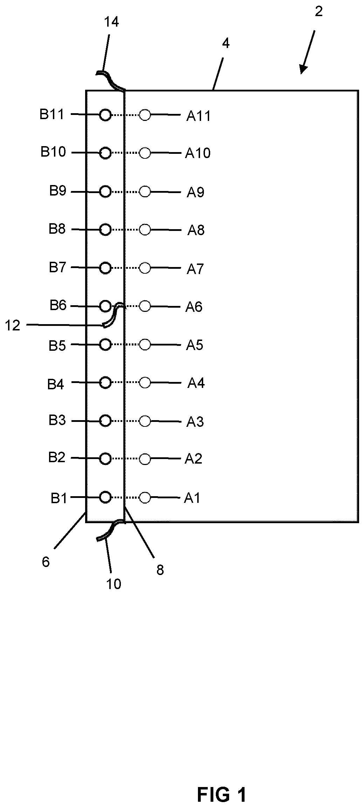

**Figure 1** is a schematic plan view of a duvet component 2 in a first unfastened configuration. The duvet component 2 comprises a quilted or duvet region 4 and a flap 6. The quilted region 4 comprises a filler material disposed between opposing first and second layers of fabric. The flap 6 is coupled to the quilted region 4 along a seam 8.

A plurality of fastener components A1-A11 are disposed on the quilted region 4 and a plurality of fastener components B1-B11 are disposed on the flap 6. Each of the plurality of fastener components A1-A1 1 and B1-B11 are disposed on a single side of the duvet component 2 (i.e. the side of the duvet component 2 shown in Figure 1). Each of the plurality of the fastener components A1-A11 disposed on the quilted region 4 opposes (i.e. is positioned directly across from) a respective one of the plurality of fastener components B1-B11 disposed on the flap 6. In particular, fastener component A1, fastener component A2, fastener component A3, fastener component A4, fastener component A5, fastener component A6, fastener component A7, fastener component A8, fastener component A9, fastener component A10 and fastener component A11 oppose and are adjacent (i.e. next to) to fastener component B1, fastener component B2, fastener component B3, fastener component B4, fastener component B5, fastener component B6, fastener component B7, fastener component B8, fastener component B9, fastener component B10 and fastener component B11, respectively. Each of the plurality of fastener components A1-A11 disposed on the quilted region 4 forms a pair of fastener components with its respective one of the plurality of fastener components B1-B11 disposed on the flap 6 (e.g. fastener components A1 and B1 form a pair of fastener components, fasteners B2 and B2 form a pair of fasteners, etc.). Each pair of fastener components forms a fastener. Each pair of fastener components lies on a respective axis (shown as an imaginary dashed line in Figure 1) which is perpendicular to the seam 8. The fastener components forming each pair of fastener components are spaced from the seam 8 by an equal distance. The plurality of fastener components A1-A11 are arranged in a first line and are separated from each other by an equal distance. Likewise, the plurality of fastener components B1-B11 are arranged in a second line and are separated from each other by an equal distance.

Fastener component A1, fastener component A2, fastener component A3, fastener component A4, fastener component A5, fastener component A6, fastener component A7, fastener component A8, fastener component A9, fastener component A10 and fastener component A11 are configured for connection (i.e. configured to be secured) to fastener component B1, fastener component B2, fastener component B3, fastener component B4, fastener component B5, fastener component B6, fastener component B7, fastener component B8, fastener component B9, fastener component B10 and fastener component B11, respectively. The plurality of fastener components A1-A11 are hook fastener components and the plurality of fastener components B1-B11 are loop fastener components that together form hook-and-loop fasteners (also referred to as hook-and-pile fasteners, touch fasteners or Velcro). In the first configuration, the fastener components A1-A11 are not connected to the fastener components B1-B11.

The duvet component 2 further comprises a first cord 10, a second cord 12 and a third cord 14. The first, second and third cords 10, 12, 14 each comprise a fixed end and a free end. The fixed ends of the first, second and third cords 10, 12, 14 are attached to the duvet component 2 at or near to the seam 8. Accordingly, the fixed ends of the first, second and third cords 10, 12, 14 are attached to or near to an edge of the quilted region 4.

The fixed end of the first cord 10 is attached to the duvet component 2 at a first end of the seam 8, along a first edge of the duvet component 2. The fixed end of the third cord 14 is attached to the duvet component 2 at a second end of the seam 8, along a second edge of the duvet component 2. The fixed end of the second cord 12 is attached to the duvet component 2 at a midpoint of the seam 8, between the first and third cords 10, 14. The first, second and third cords 10, 12, 14 are spaced equidistant from each other.

Although the duvet component 2 is shown as comprising three cords, any plurality of cords may be provided. For example, in alternative arrangements, one of the first, second and third cords 10, 12, 14 (e.g. the second cord 12) may be omitted. In alternative arrangements more than three cords may be provided.

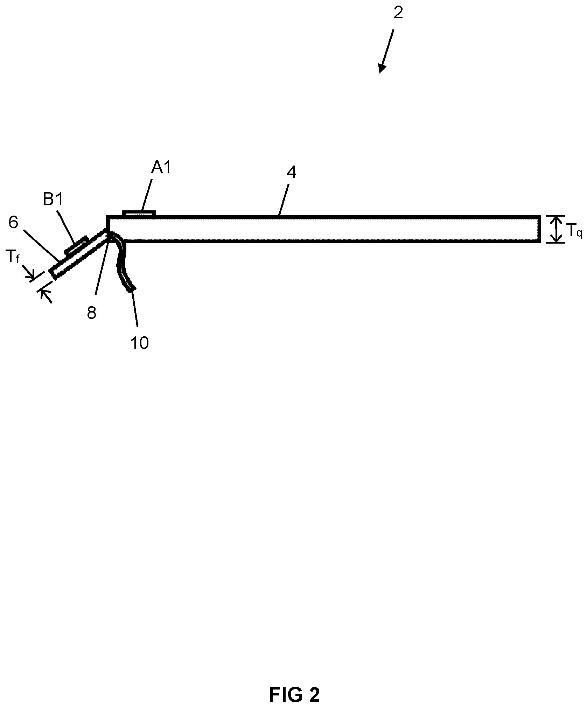

**Figure 2** is a schematic side view of the duvet component 2 in the first configuration. The flap 6 is able to pivot with respect to the quilted region 4. The flap 6 pivots along the seam 8. As shown, the average thickness T_{f} of the flap 4 is less than the average thickness T_{q} of the quilted region 4.

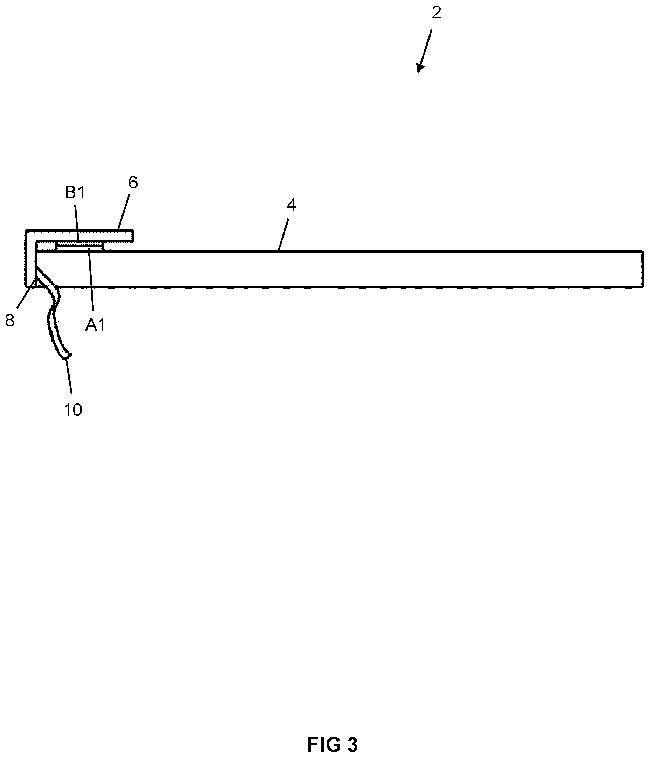

**Figure 3** is a schematic side view of the duvet component 2 in a second fastened configuration. In the second configuration, the flap 6 has pivoted with respect to the quilted region 4 such that each of the plurality of the fastener components A1-A11 disposed on the quilted region 4 is connected its respective one of the plurality of fastener components B1-B11 disposed on the flap 6. The duvet component 2 in the second configuration can be used as a single duvet. In the second fastened configuration, the first, second and third cords 10, 12, 14 are not tied to another cord.

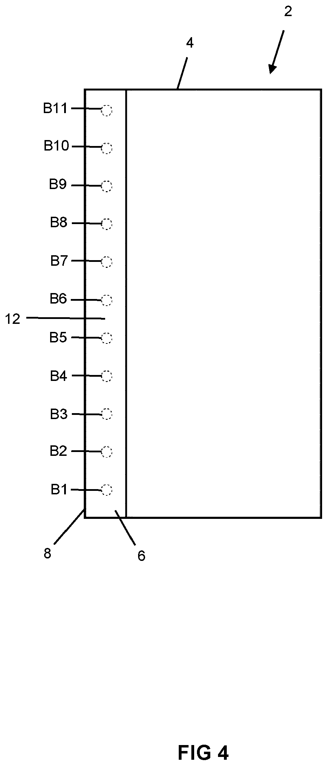

**Figure 4** is a schematic plan view of the duvet component 2 in the second configuration. From the viewpoint shown in Figure 4, the fastener components A1-A11 are disposed behind the fastener components B1-B11. The fastener components B1-B11 are disposed behind the flap 6 and shown in phantom. In the arrangement shown in Figure 4, the first, second and third cords 10, 12, 14 have been tucked out of sight between the quilted region 4 and the flap 6.

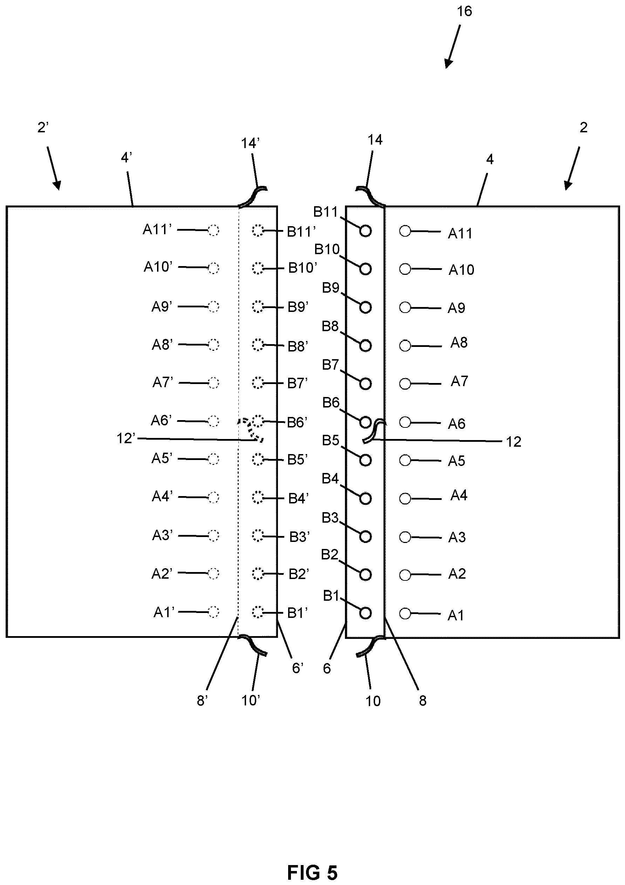

**Figure 5** is a schematic plan view of a duvet 16 in a first unfastened configuration. The duvet 16 comprises a first duvet component 2 as described above. The duvet 16 further comprises a second duvet component 2'. The second duvet component 2' substantially corresponds to the first duvet component 2 described above, and corresponding features are shown and denoted using corresponding reference numerals with the addition of an apostrophe. In the arrangement shown in Figure 5, the second duvet component 2' is rotated 180 degrees about a vertical axis with respect to the first duvet component 2. Accordingly, the plurality of fastener components A1'-A11' disposed on the quilted region 4' of the second duvet component 2', the plurality of fastener components B1'-B11' disposed on the flap 6' of the second duvet component 2' and the second cord 12' are disposed behind the quilted region 4' and the flap 6' but shown in phantom.

Each of the plurality of the fastener components A1-A11 disposed on the quilted region 4 of the first duvet component 2 is configured for connection to a respective one of the plurality of fastener components B1'-B11' disposed on the flap 6' of the second duvet component 2'. In particular, fastener component A1, fastener component A2, fastener component A3, fastener component A4, fastener component A5, fastener component A6, fastener component A7, fastener component A8, fastener component A9, fastener component A10 and fastener component A11 of the first duvet component 2 are configured for connection to fastener component B1', fastener component B2', fastener component B3', fastener component B4', fastener component B5', fastener component B6', fastener component B7', fastener component B8', fastener component B9', fastener component B10' and fastener component B11' of the second duvet component 2', respectively. Each of the plurality of fastener components A1-A11 disposed on the quilted region 4 of the first duvet component 2 forms a pair of fastener components with its respective one of the plurality of fastener components B1'-B11' disposed on the flap 6' of the second duvet component 2'. Each pair of fastener components forms a fastener.

Further, each of the plurality of the fastener components B1-B11 disposed on the flap 6 of the first duvet component 2 is configured for connection to a respective one of the plurality of fastener components A1'-A11' disposed on the quilted region 4' of the second duvet component 2'. In particular, fastener component B1, fastener component B2, fastener component B3, fastener component B4, fastener component B5, fastener component B6, fastener component B7, fastener component B8, fastener component B9, fastener component B10 and fastener component B11 of the first duvet component 2 are configured for connection to fastener component A1', fastener component A2', fastener component A3', fastener component A4', fastener component A5', fastener component A6', fastener component A7', fastener component A8', fastener component A9', fastener component A10' and fastener component A11' of the second duvet component 2', respectively. Each of the plurality of the fastener components B1-B11 disposed on the flap 6 of the first duvet component 2 forms a pair of fastener components with its respective one of the plurality of fastener components A1'-A11' disposed on the quilted region 4' of the second duvet component 2'. Each pair of fastener components forms a fastener.

The positions of the first, second and third cords 10, 12, 14 of the first duvet component 2 correspond to the positions of the first, second and third cords 10', 12', 14' of the second duvet component. Each of the plurality of the cords 10, 12, 14 of the first duvet component 2 is configured for connection to a respective one of the cords 10', 12', 14' of the second duvet component 2'. In particular, first cord 10, second cord 12 and third cord 14 of the first duvet component 2 are configured for connection to first cord 10', second cord 12' and third cord 14' of the second duvet component 2', respectively.

In the first configuration, the fastener components A1-A1 1 are not connected to the fastener components B1'-B11', the fastener components B1-B11 are not connected to the fastener components A1'-A11' and the first, second and third cords 10, 12, 14 are not connected to the first, second and third cords 10', 12', 14'.

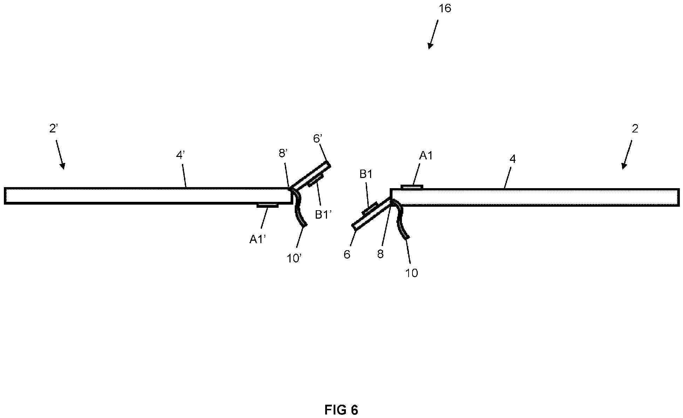

**Figure 6** is a schematic side view of the duvet 16 in the first unfastened configuration.

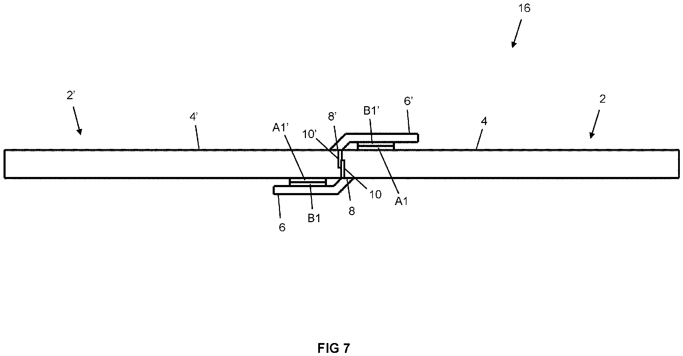

**Figure 7** is a schematic side view of the duvet 16 in a second fastened configuration. In the second configuration, each of the plurality of the fastener components A1-A11 is connected to its respective one of the plurality of fastener components B1'-B11' and each of the plurality of the fastener components B1-B11 is connected to its respective one of the plurality of fastener components A1'-A11'. The first, second and third cords 10, 12, 14 of the first duvet component 2 are tied to the first, second and third cords 10', 12', 14' of the second duvet component 2', respectively (shown in a simplified schematic manner in Figure 7, for clarity).

During assembly, a user can approximately align the first and second duvet components 2, 2' before tying each cord of the first plurality of cords 10, 12, 14 of the first duvet component 2 to a respective cord of the second plurality of cords 10', 12', 14' of the second duvet component 2'. The tying process ensures that the first and second duvet components 2, 2' are accurately and securely aligned with each other at the locations of the cords 10, 12, 14, 10', 12', 14'. The user is then able to easily manipulate the first and second duvet components 2, 2' such that the fastener components A1-A11, B1-B11, A1'-A11', B1'-B11' of the first and second duvet components 2, 2' are correctly aligned, before the fastener components A1-A11, B1-B11, A1'-A11', B1'-B11' of the first and second duvet components 2, 2' are finally connected to each other. Connecting the first and second fastener components A1-A11, B1-B11, A1'-A11', B1'-B11' when they are properly aligned reduces assembly time and improves the air seal (i.e. minimizes the air gap) between the first and second duvet components 2, 2', thereby improving the thermal properties of the duvet 16.

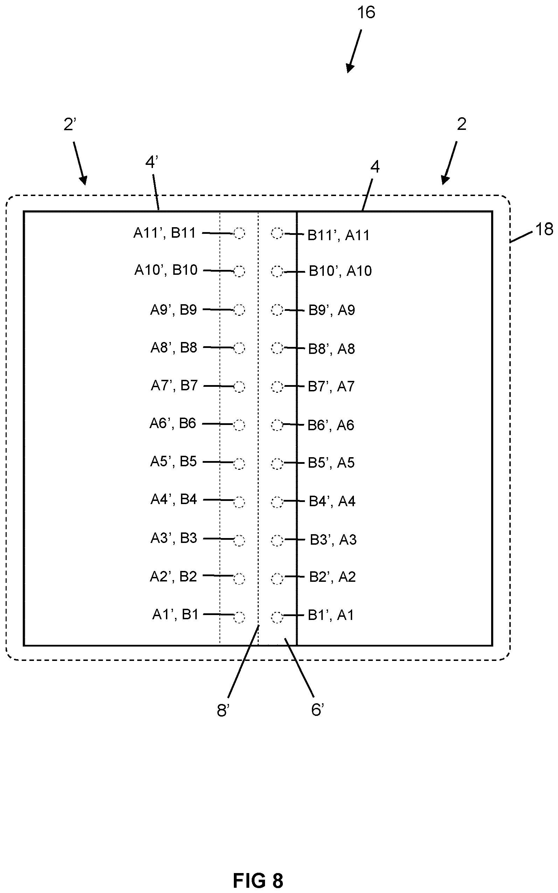

**Figure 8** is a schematic plan view of the duvet 16 in the second configuration. From the viewpoint shown in Figure 8, the fastener components A1-A11 are disposed behind the fastener components B1'-B11' and the fastener components B1-B11 are disposed behind the fastener components A1'-A11'. The plurality of fastener components A1'-A11' and the plurality of fastener components B1'-B11' are disposed behind the quilted region 4' and the flap 6', respectively, but shown in phantom. The duvet 16 when assembled in the second configuration can be inserted into a duvet cover 18, shown in phantom in Figure 8. The cover 18 is sized to receive the first duvet component 2 and the second duvet component 2' of the duvet 16. The first, second and third cords 10, 10', 12, 12', 14, 14' of the first and second duvet components 2, 2' are not shown in Figure 8, for clarity.

The thermal insulance of the first duvet component 2 differs from the thermal insulance of the second duvet component 2'. In particular, the thermal insulance of the quilted region 4 differs from the thermal insulance of the quilted region 4'. In the given example, the first duvet component 2 has a thermal insulance higher than the thermal insulance of the second duvet component 2'. By way of example, the first duvet component 2 can have a tog rating of 10 and the second duvet component 2' can have a tog rating of 5. However, in alternative arrangements the first duvet component 2 may have a thermal insulance lower than the thermal insulance of the second duvet component 2'. Accordingly, different sides of the duvet 16 provide different amounts of thermal insulation to occupants sleeping under different sections of the duvet 16 (i.e. beneath the portion of the duvet 16 formed by the first duvet component 2 and the portion of the duvet 16 formed by the second duvet component 2') without requiring the use of separate detached individual duvets. This results in an improvement in the quality of each occupant's sleep.

The connections between the fastener components A1-A11 and the fastener components B1'-B11' and the connections between the fastener components B1-B11 and the fastener components A1'-A11' are releasable (i.e. temporary) and can be undone and done back up by a user. Accordingly, different combinations of individual duvet components (i.e. first and second duvet components) having different characteristics (e.g. different thermal insulance ratings) can be used interchangeably with each other depending on the particular requirements of the occupants, which may change over time.

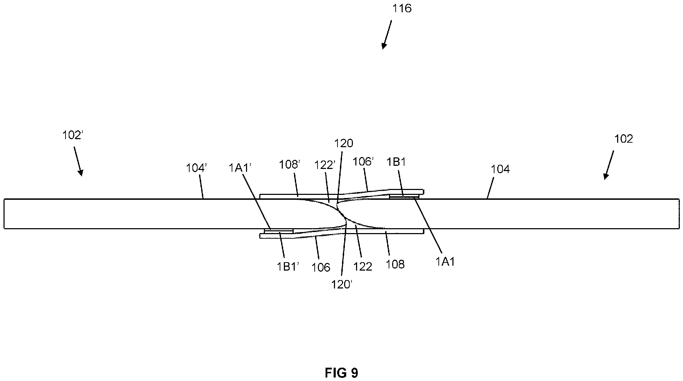

**Figure 9** is a side view of an alternative duvet 116 in the second configuration. The alternative duvet 116 substantially corresponds to the duvet 16 described above and comprises a first alternative duvet component 102 and a second alternative duvet component 102' substantially corresponding to the first duvet component 2 and the second duvet component 2'. Corresponding features are denoted using the same reference numerals, with the addition of a value of 100 or a prefix of 1. The alternative duvet 116 comprises first, second and third cords 10, 10', 12, 12', 14, 14' of the first and second alternative duvet components 102, 102' that correspond to those referred to above and function in a corresponding manner. However, these are not shown in Figure 9, for clarity.

The seam 108 of the first alternative duvet component 102 is offset from an edge 120 of the quilted region 104 such that a slot or groove 122 is formed between the quilted region 104 and the flap 106. Likewise, the seam 108' of the second alternative duvet component 102' is offset from an edge 120' of the quilted region 104' such that a slot or groove 122' is formed between the quilted region 104' and the flap 106'. Accordingly, the edge 120 of the first alternative duvet component 102 locates within the slot 122' of the second alternative duvet component 102' and the edge 120' of the second alternative duvet component 102' locates within the slot 122 of the first alternative duvet component 102. Accordingly, the correct relative positions of the first and second alternative duvet components 102, 102' can more easily be achieved during assembly and maintained during use.

In the arrangements described above, the filler material of the quilted region of the first duvet is the same as the filler material of the quilted region of the second duvet. However, in alternative arrangements, the filler material of the quilted region of the first duvet is a first filler material and the filler material of the quilted region of the second duvet is a second filler material different from the first filler material. The filler materials may be any of wool, silk, botanic, lyocell, bamboo, feather, down, synthetics, cotton or kapok, for example. Different filler materials include filler materials with different proportions of constituent materials. For example, the filler material of the quilted region of the first duvet may comprise a wool filling, whereas the filler material of the quilted region of the second duvet may comprise a silk filling or any other filling.

In the arrangements described above, the average thickness of the first duvet component 2 is the same as the average thickness of the second duvet component 2'. However, in alternative arrangements, the average thickness of the first duvet component 2 may differ from the average thickness of the second duvet component 2'. In particular, the average thickness of the quilted region 4 may differ from the average thickness of the quilted region 4'. For example, the first duvet component 2 or quilted region 4 may have an average thickness that is greater or less than the average thickness of the second duvet component 2' or quilted region 4'.

In the arrangements described above, the average grammage (i.e. mass per unit area) of the first duvet component 2 is the same as the average grammage of the second duvet component 2'. However, in alternative arrangements, the average grammage of the first duvet component 2 may differ from the average grammage of the second duvet component 2'. In particular, the average grammage of the quilted region 4 may differ from the average grammage of the quilted region 4'. For example, the first duvet component 2 or quilted region 4 may have an average grammage that is greater or less than the average grammage of the second duvet component 2' or quilted region 4'.

In the arrangements described above, the thermal insulance of the first duvet component 2 is the same as the thermal insulance of the second duvet component 2'. However, in alternative arrangements, the thermal insulance of the first duvet component 2 may differ from the thermal insulance of the second duvet component 2'. In particular, the thermal insulance of the quilted region 4 may differ from the thermal insulance of the quilted region 4'. For example, the first duvet component 2 or quilted region 4 may have an thermal insulance that is greater or less than the thermal insulance of the second duvet component 2' or quilted region 4'.

In the arrangements described above, the shape of the first duvet component 2 is the same as the shape of the second duvet component 2'. However, in alternative arrangements, the shape of the first duvet component 2 may differ from the shape of the second duvet component 2'. In particular, the shape of the quilted region 4 may differ from the shape of the quilted region 4'.

In the arrangements described above, the surface area of the first duvet component 2 is the same as the surface area of the second duvet component 2'. However, in alternative arrangements, the surface area of the first duvet component 2 may differ from the surface area of the second duvet component 2'. In particular, the surface area of the quilted region 4 may differ from the surface area of the quilted region 4'. For example, the first duvet component 2 or quilted region 4 may have a surface area that is greater or less than the surface area of the second duvet component 2' or quilted region 4'.

The features of the abovementioned alternative configurations may also be used with configurations having features of the first and second alternative duvet components 102, 102'.

It has been described that the plurality of fastener components A1-A11 are hook fastener components and the plurality of fastener components B1-B11 are loop fastener components. However, the plurality of fastener components A1-A11 may be loop fastener components and the plurality of fastener components B1-B11 may be hook fastener components. In alternative arrangements, the plurality of fastener components A1-A11 may be a plurality of different types of fastener components (i.e. some hook fastener components and some loop fastener components) and the plurality of fastener components B1-B11 may be a plurality of different types of complementary fastener components. It has been described that the plurality of fastener components A1-A1 1 and the plurality of fastener components B1-B11 form hook-and-loop fasteners, however in alternative arrangements they may form different types of fasteners. For example, the plurality of fastener components A1-A11 and the plurality of fastener components B1-B11 may form button and loop fasteners or snap fasteners, for example. The plurality of fastener components A1-A11 and the plurality of fastener components B1-B11 may form a variety of different types of fastener. A different number of fastener components may be provided. A different number of cords may be provided.

The disclosure refers to thermal insulance in units of tog, as this is the standard unit in the industry. It should be noted that 1 tog is equivalent to 0.1m²K/W.

## Claims

1. A duvet (16) comprising:
a first duvet component (2), the first duvet component (2) comprising:
a first quilted region (4);
a first flap (6) coupled to the first quilted region (4) along a first seam (8);
a plurality of fastener components (A1-A11) disposed on the first quilted region (4); and
a plurality of fastener components (B1-B11) disposed on the first flap (6), wherein each of the plurality of fastener components (A1-A11) disposed on the first quilted region (4) opposes and is configured for connection to a respective one of the plurality of fastener components (B1-B11) disposed on the first flap (6);
and
a second duvet component (2'), the second duvet component (2') comprising:
a second quilted region (4');
a second flap (6') coupled to the second quilted region (4') along a second seam (8');
a plurality of fastener components (A1'-A11') disposed on the second quilted region (4'); and
a plurality of fastener components (B1'-B11') disposed on the second flap (6'), wherein each of the plurality of fastener components (A1'-A11') disposed on the second quilted region (4') opposes and is configured for connection to a respective one of the plurality of fastener components (B1'-B11') disposed on the second flap (6'),
wherein each of the plurality of the fastener components (A1-A11) disposed on the first quilted region (4) of the first duvet component (2) is further configured for connection to a respective one of the plurality of fastener components (B1'-B11') disposed on the second flap (6') of the second duvet component (2');
wherein each of the plurality of the fastener components (B1-B11) disposed on the first flap (6) of the first duvet component (2) is further configured for connection to a respective one of the plurality of fastener components (A1'-A11') disposed on the second quilted region (4') of the second duvet component (2'),
wherein the first duvet component (2) further comprises a first plurality of cords (10, 12, 14) each having a fixed end attached near or at the first seam (8) and a free end and the second duvet component (2') further comprises a second plurality of cords (10', 12', 14') each having a fixed end attached near or at the second seam (8') and a free end, and
wherein each cord of the first plurality of cords (10, 12, 14) of the first duvet component (2) is configured to be tied to a respective cord of the second plurality of cords (10', 12', 14') of the second duvet component (2').

2. A duvet (16) as claimed in claim 1, wherein the quilted region (4) of the first duvet component (2) comprises a first filler material and wherein the quilted region (4') of the second duvet component (2') comprises a second filler material different from the first filler material.

3. A duvet (16) as claimed in claim 1 or 2, wherein the first duvet component (2) and the second duvet component (2') have different average thicknesses and/or wherein the first duvet component (2) and the second duvet component (2') have different average grammages and/or wherein the first duvet component (2) and the second duvet component (2') have different surface areas and/or wherein the first duvet component (2) and the second duvet component (2') have different shapes and/or wherein the first duvet component (2) and the second duvet component (2') have different thermal insulances.

4. A duvet (16) as claimed in any preceding claim, further comprising a cover (18) sized to receive the first duvet component (2) and the second duvet component (2').

5. A duvet (16) as claimed in any preceding claim, wherein each of the plurality of fastener components (A1-A11) disposed on the first quilted region (4) and each of the plurality of fastener components (B1-B11) disposed on the first flap (6) are either hook fastener components or loop fastener components of hook-and-loop fasteners and wherein each of the plurality of fastener components (A1'-A11') disposed on the second quilted region (4') and each of the plurality of fastener components (B1'-B11') disposed on the second flap (6') are either hook fastener components or loop fastener components of hook-and-loop fasteners.

6. A duvet (16) as claimed in any preceding claim, wherein each of the plurality of fastener components (A1-A11) disposed on the first quilted region (4) is of a first type and wherein each of the plurality of fastener components (B1-B11) disposed on the first flap (6) is of a second type and wherein each of the plurality of fastener components (A1'-A11') disposed on the second quilted region (4') is of the second type and wherein each of the plurality of fastener components (81'-811') disposed on the second flap (6') is of the first type.

7. A duvet (16) as claimed in any preceding claim, wherein each of the plurality of fastener components (A1-A11) disposed on the first quilted region (4) and its respective one of the plurality of fastener components (B1-B11) disposed on the first flap (6) are spaced from the first seam (8) by an equal distance and wherein each of the plurality of fastener components (A1'-A11') disposed on the second quilted region (4') and its respective one of the plurality of fastener components (81'-811') disposed on the second flap (6') are spaced from the second seam (8') by an equal distance.

8. A duvet (16) as claimed in any preceding claim, wherein each of the plurality of fastener components (A1-A11) disposed on the first quilted region (4) and its respective one of the plurality of fastener components (B1-B11) disposed on the first flap (6) lie on a respective axis which is perpendicular to the first seam (8) and wherein each of the plurality of fastener components (A1'-A11') disposed on the second quilted region (4') and its respective one of the plurality of fastener components (B1'-B11') disposed on the second flap (6') lie on a respective axis which is perpendicular to the second seam (8').

9. A duvet (16) as claimed in any preceding claim, wherein the plurality of fastener components (A1-A11) disposed on the first quilted region (4) are arranged in a first line and the plurality of fastener components (B1-B11) disposed on the first flap (6) are arranged in a second line and wherein the plurality of fastener components (A1'-A11') disposed on the second quilted region (4') are arranged in a first line and the plurality of fastener components (B1'-B11') disposed on the second flap (6') are arranged in a second line.

10. A duvet (16) as claimed in any preceding claim, wherein the plurality of fastener components (A1-A11) disposed on the first quilted region (4) are separated from each other by an equal distance and wherein the plurality of fastener components (B1-B11) disposed on the first flap (6) are separated from each other by an equal distance and wherein the plurality of fastener components (A1'-A11') disposed on the second quilted region (4') are separated from each other by an equal distance and wherein the plurality of fastener components (81'-811') disposed on the second flap (6') are separated from each other by an equal distance.

11. A duvet (16) as claimed in any preceding claim, wherein the average thickness of the first flap (6) is less than the average thickness of the first quilted region (4) and wherein the average thickness of the second flap (6') is less than the average thickness of the second quilted region (4').

12. A duvet (16) as claimed in any preceding claim, wherein the first seam (108) is offset from an edge of the first quilted region (104) such that a first slot (122) is formed between the first quilted region (104) and the first flap (106) and wherein the second seam (108') is offset from an edge of the second quilted region (104') such that a second slot (122') is formed between the second quilted region (104') and the second flap (106').

13. A duvet component (2, 2') as claimed in claim 6, wherein the fixed end of each of the one or more first cords (10, 12, 14) is fixed to an edge of the first quilted region (4) and wherein the fixed end of each of the one or more second cords (10', 12', 14') is fixed to an edge of the second quilted region (4').

14. A duvet (16) as claimed in any preceding claim, wherein each of the plurality of the fastener components (A1-A11) disposed on the first quilted region (4) is adjacent its respective one of the plurality of fastener components (B1-B11) disposed on the first flap (6) and wherein each of the plurality of the fastener components (A1'-A11') disposed on the second quilted region (4') is adjacent its respective one of the plurality of fastener components (B1'-B11') disposed on the second flap (6').

## Patentansprüche

1. Bettdecke (16), umfassend:
eine erste Bettdeckenkomponente (2), wobei die erste Bettdeckenkomponente (2) umfasst:
einen ersten gesteppten Bereich (4);
eine erste Klappe (6), die mit dem ersten gesteppten Bereich (4) entlang einer ersten Naht (8) gekoppelt ist;
eine Vielzahl von auf dem ersten gesteppten Bereich (4) angeordneten Verbindungskomponenten (A1-A11) ; und
eine Vielzahl von auf der ersten Klappe (6) angeordneten Verbindungskomponenten (B1-B11), wobei jede der Vielzahl der auf dem ersten gesteppten Bereich (4) angeordneten Verbindungskomponenten (A1-A11) einer entsprechenden der Vielzahl der auf der ersten Klappe (6) angeordneten Verbindungskomponenten (B1-B11) gegenüberliegt und für eine Verbindung damit ausgebildet ist; und
eine zweite Bettdeckenkomponente (2'), wobei die zweite Bettdeckenkomponente (2') umfasst:
einen zweiten gesteppten Bereich (4');
eine zweite Klappe (6'), die mit dem zweiten gesteppten Bereich (4') entlang einer zweiten Naht (8') gekoppelt ist;
eine Vielzahl von auf dem zweiten gesteppten Bereich (4') angeordneten Verbindungskomponenten (Al'-A11'); und
eine Vielzahl von auf der zweiten Klappe (6') angeordneten Verbindungskomponenten (B1'-B11') wobei jede der Vielzahl der auf dem zweiten gesteppten Bereich (4') angeordneten Verbindungskomponenten (A1'-A11') einer entsprechenden der Vielzahl der auf der zweiten Klappe (6') angeordneten Verbindungskomponenten (B1'-B11') gegenüberliegt und für eine Verbindung damit ausgebildet ist; und
wobei jede der Vielzahl der auf dem ersten gesteppten Bereich (4) der ersten Bettdeckenkomponente (2) angeordneten Verbindungskomponenten (A1-A11) ferner zur Verbindung mit einer entsprechenden der Vielzahl der auf der zweiten Klappe (6') der zweiten Bettdeckenkomponente (2') angeordneten Verbindungskomponenten (B1'-B11') ausgebildet ist;
wobei jede der Vielzahl der auf der ersten Klappe (6) der ersten Bettdeckenkomponente (2) angeordneten Verbindungskomponenten (B1-B11) ferner zur Verbindung mit einer entsprechenden der Vielzahl der auf dem zweiten gesteppten Bereich (4') der zweiten Bettdeckenkomponente (2') angeordneten Verbindungskomponenten (A1'-A11') ausgebildet ist,
wobei die erste Bettdeckenkomponente (2) ferner eine erste Vielzahl von Schnüren (10, 12, 14) umfasst, die jeweils ein festes Ende, das nahe oder an der ersten Naht (8) angebracht ist, und ein freies Ende aufweisen, und die zweite Bettdeckenkomponente (2') ferner eine zweite Vielzahl von Schnüren (10', 12', 14') umfasst, die jeweils ein festes Ende, das nahe oder an der zweiten Naht (8') angebracht ist, und ein freies Ende aufweisen, und
wobei jede Schnur der ersten Vielzahl von Schnüren (10, 12, 14) der ersten Bettdeckenkomponente (2) dazu ausgebildet ist, mit einer entsprechenden Schnur der zweiten Vielzahl von Schnüren (10', 12', 14') der zweiten Bettdeckenkomponente (2') verbunden zu werden.

2. Bettdecke (16) gemäß Anspruch 1, wobei der gesteppte Bereich (4) der ersten Bettdeckenkomponente (2) ein erstes Füllmaterial umfasst und wobei der gesteppte Bereich (4') der zweiten Bettdeckenkomponente (2') ein zweites Füllmaterial umfasst, das sich von dem ersten Füllmaterial unterscheidet.

3. Bettdecke (16) gemäß Anspruch 1 oder 2, wobei die erste Bettdeckenkomponente (2) und die zweite Bettdeckenkomponente (2') unterschiedliche mittlere Dicken aufweisen und/oder wobei die erste Bettdeckenkomponente (2) und die zweite Bettdeckenkomponente (2') unterschiedliche mittlere Flächengewichte aufweisen und/oder wobei die erste Bettdeckenkomponente (2) und die zweite Bettdeckenkomponente (2') unterschiedliche Oberflächen aufweisen und/oder wobei die erste Bettdeckenkomponente (2) und die zweite Bettdeckenkomponente (2') unterschiedliche Formen aufweisen und/oder wobei die erste Bettdeckenkomponente (2) und die zweite Bettdeckenkomponente (2') unterschiedliche Wärmeisolierungen aufweisen.

4. Bettdecke (16) gemäß einem der vorhergehenden Ansprüche, ferner umfassend einen Bezug (18), der so bemessen ist, dass er die erste Bettdeckenkomponente (2) und die zweite Bettdeckenkomponente (2') aufnehmen kann.

5. Bettdecke (16) gemäß einem der vorhergehenden Ansprüche, wobei jede der Vielzahl der auf dem ersten gesteppten Bereich (4) angeordneten Verbindungskomponenten (A1-A11) und jede der Vielzahl der auf der ersten Klappe (6) angeordneten Verbindungskomponenten (B1-B11) entweder Hakenverbindungskomponenten oder Schlaufenverbindungskomponenten von Klettverbindungen sind, und wobei jede der Vielzahl der auf dem zweiten gesteppten Bereich (4') angeordneten Verbindungskomponenten (A1'-A11') und jede der Vielzahl der auf der zweiten Klappe (6') angeordneten Verbindungskomponenten (B1'-B11') entweder Hakenverschlusskomponenten oder Schlaufenverschlusskomponenten von Klettverbindungen sind.

6. Bettdecke (16) gemäß einem der vorhergehenden Ansprüche, wobei jede der Vielzahl der an dem ersten gesteppten Bereich (4) angeordneten Verbindungskomponenten (A1-A11) von einer ersten Art ist und wobei jede der Vielzahl der an der ersten Klappe (6) angeordneten Verbindungskomponenten (B1-B11) von einer zweiten Art ist und wobei jede der Vielzahl der an dem zweiten gesteppten Bereich (4') angeordneten Verbindungskomponenten (A1'-A11') von der zweiten Art ist und wobei jede der Vielzahl der an der zweiten Klappe (6') angeordneten Verbindungskomponenten (B1'-B11') von der ersten Art ist.

7. Bettdecke (16) gemäß einem der vorhergehenden Ansprüche, wobei jede der Vielzahl der auf dem ersten gesteppten Bereich (4) angeordneten Verbindungskomponenten (A1-A11) und ihre entsprechende der Vielzahl der auf der ersten Klappe (6) angeordneten Verbindungskomponenten (B1-B11) von der ersten Naht (8) um einen gleichen Abstand beabstandet sind und wobei jede der Vielzahl der auf dem zweiten gesteppten Bereich (4') angeordneten Verbindungskomponenten (A1'-A11') und ihre entsprechende der Vielzahl der auf der zweiten Klappe (6') angeordneten Verbindungskomponenten (B1'-B11') von der zweiten Naht (8') um einen gleichen Abstand beabstandet sind.

8. Bettdecke (16) gemäß einem der vorhergehenden Ansprüche, wobei jede der Vielzahl der auf dem ersten gesteppten Bereich (4) angeordneten Verbindungskomponenten (A1-A11) und ihre entsprechende der Vielzahl der auf der ersten Klappe (6) angeordneten Verbindungskomponenten (B1-B11) auf einer jeweiligen Achse liegen, die rechtwinklig zur ersten Naht (8) verläuft, und wobei jede der Vielzahl der auf dem zweiten gesteppten Bereich (4') angeordneten Verbindungskomponenten (A1'-A11') und ihre entsprechende der Vielzahl der auf der zweiten Klappe (6') angeordneten Verbindungskomponenten (B1'-B11') auf einer jeweiligen Achse liegen, die rechtwinklig zur zweiten Naht (8') verläuft.

9. Bettdecke (16) gemäß einem der vorhergehenden Ansprüche, wobei die Vielzahl der auf dem ersten gesteppten Bereich (4) angeordneten Verbindungskomponenten (A1-A11) in einer ersten Linie und die Vielzahl der auf der ersten Klappe (6) angeordneten Verbindungskomponenten (B1-B11) in einer zweiten Linie angeordnet sind und wobei die Vielzahl der auf dem zweiten gesteppten Bereich (4') angeordneten Verbindungskomponenten (A1'-A11') in einer ersten Linie und die Vielzahl der auf der zweiten Klappe (6') angeordneten Verbindungskomponenten (B1'-B11') in einer zweiten Linie angeordnet sind.

10. Bettdecke (16) gemäß einem der vorhergehenden Ansprüche, wobei die Vielzahl der auf dem ersten gesteppten Bereich (4) angeordneten Verbindungskomponenten (A1-A11) in gleichem Abstand voneinander angeordnet sind und wobei die Vielzahl der auf der ersten Klappe (6) angeordneten Verbindungskomponenten (B1-B11) in gleichem Abstand voneinander angeordnet sind und wobei die Vielzahl der auf dem zweiten gesteppten Bereich (4') angeordneten Verbindungskomponenten (A1'-A11') in gleichem Abstand voneinander angeordnet sind und wobei die Vielzahl der auf der zweiten Klappe (6') angeordneten Verbindungskomponenten (B1'-B11') in gleichem Abstand voneinander angeordnet sind.

11. Bettdecke (16) gemäß einem der vorhergehenden Ansprüche, wobei die mittlere Dicke der ersten Klappe (6) geringer als die mittlere Dicke des ersten gesteppten Bereichs (4) ist und wobei die mittlere Dicke der zweiten Klappe (6') geringer als die mittlere Dicke des zweiten gesteppten Bereichs (4') ist.

12. Bettdecke (16) gemäß einem der vorhergehenden Ansprüche, wobei die erste Naht (108) von einer Kante des ersten gesteppten Bereichs (104) so versetzt ist, dass ein erster Schlitz (122) zwischen dem ersten gesteppten Bereich (104) und der ersten Klappe (106) gebildet wird, und wobei die zweite Naht (108') von einer Kante des zweiten gesteppten Bereichs (104') so versetzt ist, dass ein zweiter Schlitz (122') zwischen dem zweiten gesteppten Bereich (104') und der zweiten Klappe (106') gebildet wird.

13. Bettdeckenkomponente (2, 2') gemäß Anspruch 6, wobei das feste Ende jeder der einen oder der mehreren ersten Schnüre (10, 12, 14) an einer Kante des ersten gesteppten Bereichs (4) befestigt ist und wobei das feste Ende jeder der einen oder der mehreren zweiten Schnüre (10', 12', 14') an einer Kante des zweiten gesteppten Bereichs (4') befestigt ist.

14. Bettdecke (16) gemäß einem der vorhergehenden Ansprüche, wobei jede der Vielzahl der auf dem ersten gesteppten Bereich (4) angeordneten Verbindungskomponenten (A1-A11) an ihre entsprechende der Vielzahl der auf der ersten Klappe (6) angeordneten Verbindungskomponenten (B1-B11) angrenzt und wobei jede der Vielzahl der auf dem zweiten gesteppten Bereich (4') angeordneten Verbindungskomponenten (A1'-A11') an ihre entsprechende der Vielzahl der auf der zweiten Klappe (6') angeordneten Verbindungskomponenten (B1'-B11') angrenzt.

## Revendications

1. Couette (16) comprenant :
un premier composant de couette (2), le premier composant de couette (2) comprenant :
une première région matelassée (4) ;
un premier rabat (6) accouplé à la première région matelassée (4) le long d'une première couture (8) ;
une pluralité de composants de système de fixation (A1 à A11) disposés sur la première région matelassée (4) ; et
une pluralité de composants de système de fixation (B1 à B11) disposés sur le premier rabat (6), chacun de la pluralité de composants de système de fixation (A1 à A11) disposés sur la première région matelassée (4) étant situé en face d'un composant respectif de la pluralité de composants de système de fixation (B1 à B11) disposés sur le premier rabat (6) et étant conçu pour être raccordé à celui-ci; et
un second composant de couette (2'), le second composant de couette (2') comprenant :
une seconde région matelassée (4') ;
un second rabat (6') accouplé à la seconde région matelassée (4') le long d'une seconde couture (8') ;
une pluralité de composants de système de fixation (A1' à A11') disposés sur la seconde région matelassée (4') ; et
une pluralité de composants de système de fixation (B1' à B11') disposés sur le second rabat (6'), chacun de la pluralité de composants de système de fixation (Al' à A11') disposés sur la seconde région matelassée (4') étant situé en face d'un composant respectif de la pluralité de composants de système de fixation (B1' à B11') disposés sur le second rabat (6') et étant conçu pour être raccordé à celui-ci,
chacun de la pluralité de composants de système de fixation (A1 à A11) disposés sur la première région matelassée (4) du premier composant de couette (2) étant, en outre, conçu pour être raccordé à un composant respectif de la pluralité de composants de système de fixation (B1' à B11') disposés sur le second rabat (6') du second composant de couette (2') ;
chacun de la pluralité de composants de système de fixation (B1 à B11) disposés sur le premier rabat (6) du premier composant de couette (2) étant, en outre, conçu pour être raccordé à un composant respectif de la pluralité de composants de système de fixation (Al' à A11') disposés sur la seconde région matelassée (4') du second composant de couette (2'),
le premier composant de couette (2) comprenant, en outre, une première pluralité de cordons (10, 12, 14) comportant chacun une extrémité fixe attachée à proximité ou au niveau de la première couture (8) et une extrémité libre et le second composant de couette (2') comprenant, en outre, une seconde pluralité de cordons (10', 12', 14') comportant chacun une extrémité fixe attachée à proximité ou au niveau de la seconde couture (8') et une extrémité libre, et
chaque cordon de la première pluralité de cordons (10, 12, 14) du premier composant de couette (2) étant conçu pour être attaché à un cordon respectif de la seconde pluralité de cordons (10', 12', 14') du second composant de couette (2').

2. Couette (16) selon la revendication 1, dans laquelle la région matelassée (4) du premier composant de couette (2) comprend un premier matériau de garnissage et dans laquelle la région matelassée (4') du second composant de couette (2') comprend un second matériau de garnissage différent du premier matériau de garnissage.

3. Couette (16) selon la revendication 1 ou 2, dans laquelle le premier composant de couette (2) et le second composant de couette (2') présentent des épaisseurs moyennes différentes et/ou dans laquelle le premier composant de couette (2) et le second composant de couette (2') présentent des grammages moyens différents et/ou dans laquelle le premier composant de couette (2) et le second composant de couette (2') présentent des surfaces différentes et/ou dans laquelle le premier composant de couette (2) et le second composant de couette (2') présentent des formes différentes et/ou dans laquelle le premier composant de couette (2) et le second composant de couette (2') présentent des capacités d'isolation thermique différentes.

4. Couette (16) selon l'une quelconque des revendications précédentes, comprenant, en outre, une housse (18) dimensionnée pour recevoir le premier composant de couette (2) et le second composant de couette (2').

5. Couette (16) selon l'une quelconque des revendications précédentes, dans laquelle chacun de la pluralité de composants de système de fixation (A1 à A11) disposés sur la première région matelassée (4) et chacun de la pluralité de composants de système de fixation (B1 à B11) disposés sur le premier rabat (6) sont soit des composants de système de fixation sous forme de crochets, soit des composants de système de fixation sous forme de bouclettes de systèmes de fixation autoagrippants et dans laquelle chacun de la pluralité de composants de système de fixation (Al' à A11') disposés sur la seconde région matelassée (4') et chacun de la pluralité de composants de système de fixation (B1' à B11') disposés sur le second rabat (6') sont soit des composants de système de fixation sous forme de crochets, soit des composants de système de fixation sous forme de bouclettes de systèmes de fixation autoagrippants.

6. Couette (16) selon l'une quelconque des revendications précédentes, dans laquelle chacun de la pluralité de composants de système de fixation (A1 à A11) disposés sur la première région matelassée (4) est d'un premier type et dans laquelle chacun de la pluralité de composants de système de fixation (B1 à B11) disposés sur le premier rabat (6) est d'un second type et dans laquelle chacun de la pluralité de composants de système de fixation (Al' à A11') disposés sur la seconde région matelassée (4') est du second type et chacun de la pluralité de composants de système de fixation (B1' à B11') disposés sur le second rabat (6') est du premier type.

7. Couette (16) selon l'une quelconque des revendications précédentes, dans laquelle chacun de la pluralité de composants de système de fixation (A1 à A11) disposés sur la première région matelassée (4) et son composant respectif de la pluralité de composants de système de fixation (B1 à B11) disposés sur le premier rabat (6) sont espacés de la première couture (8) d'une distance égale et dans laquelle chacun de la pluralité de composants de système de fixation (Al' à A11') disposés sur la seconde région matelassée (4') et son composant respectif de la pluralité de composants de système de fixation (B1' à B11') disposés sur le second rabat (6') sont espacés de la seconde couture (8') d'une distance égale.

8. Couette (16) selon l'une quelconque des revendications précédentes, dans laquelle chacun de la pluralité de composants de système de fixation (A1 à A11) disposés sur la première région matelassée (4) et son composant respectif de la pluralité de composants de système de fixation (B1 à B11) disposés sur le premier rabat (6) sont situés sur un axe respectif qui est perpendiculaire à la première couture (8) et dans laquelle chacun de la pluralité de composants de système de fixation (Al' à A11') disposés sur la seconde région matelassée (4') et son composant respectif de la pluralité de composants de système de fixation (B1' à B11') disposés sur le second rabat (6') sont situés sur un axe respectif qui est perpendiculaire à la seconde couture (8').

9. Couette (16) selon l'une quelconque des revendications précédentes, dans laquelle la pluralité de composants de système de fixation (A1 à A11) disposés sur la première région matelassée (4) sont agencés sous la forme d'une première ligne et la pluralité de composants de système de fixation (B1 à B11) disposés sur le premier rabat (6) sont agencés sous la forme d'une seconde ligne et dans laquelle la pluralité de composants de système de fixation (Al' à A11') disposés sur la seconde région matelassée (4') sont agencés sous la forme d'une première ligne et la pluralité de composants de système de fixation (B1' à B11') disposés sur le second rabat (6') sont agencés sous la forme d'une seconde ligne.

10. Couette (16) selon l'une quelconque des revendications précédentes, dans laquelle la pluralité de composants de système de fixation (A1 à A11) disposés sur la première région matelassée (4) sont séparés les uns des autres par une distance égale et dans laquelle la pluralité de composants de système de fixation (B1 à B11) disposés sur le premier rabat (6) sont séparés les uns des autres par une distance égale et dans laquelle la pluralité de composants de système de fixation (Al' à A11') disposés sur la seconde région matelassée (4') sont séparés les uns des autres par une distance égale et la pluralité de composants de système de fixation (B1' à B11') disposés sur le second rabat (6') sont séparés les uns des autres par une distance égale.

11. Couette (16) selon l'une quelconque des revendications précédentes, dans laquelle l'épaisseur moyenne du premier rabat (6) est inférieure à l'épaisseur moyenne de la première région matelassée (4) et dans laquelle l'épaisseur moyenne du second rabat (6') est inférieure à l'épaisseur moyenne de la seconde région matelassée (4').

12. Couette (16) selon l'une quelconque des revendications précédentes, dans laquelle la première couture (108) est décalée vis-à-vis d'un bord de la première région matelassée (104) de telle sorte qu'une première fente (122) est formée entre la première région matelassée (104) et le premier rabat (106) et dans laquelle la seconde couture (108') est décalée vis-à-vis d'un bord de la seconde région matelassée (104') de telle sorte qu'une seconde fente (122') est formée entre la seconde région matelassée (104') et le second rabat (106').

13. Composant de couette (2, 2') selon la revendication 6, dans lequel l'extrémité fixe du ou de chacun des premiers cordons (10, 12, 14) est fixée à un bord de la première région matelassée (4) et dans lequel l'extrémité fixe du ou de chacun des seconds cordons (10', 12', 14') est fixée à un bord de la seconde région matelassée (4').

14. Couette (16) selon l'une quelconque des revendications précédentes, dans laquelle chacun de la pluralité de composants de système de fixation (A1 à A11) disposés sur la première région matelassée (4) est adjacent à son composant respectif de la pluralité de composants de système de fixation (B1 à B11) disposés sur le premier rabat (6) et dans laquelle chacun de la pluralité de composants de système de fixation (Al' à A11') disposés sur la seconde région matelassée (4') est adjacent à son composant respectif de la pluralité de composants de système de fixation (B1' à B11') disposés sur le second rabat (6').
